# EUROPÄISCHE PATENTSCHRIFT

(11) **EP 0 318 021 B1**
(45) Veröffentlichungstag und Bekanntmachung des Hinweises auf die Patenterteilung: **19.01.1994**
(21) Anmeldenummer: 88119628.1
(22) Anmeldetag: 25.11.1988
(51) Int. Cl.: G06F 11/16

(54) **Schaltungsanordnung zur sicherheitswirksamen Zustandsbestimmung einer Ausgangsspeicherstufe**
Circuit arrangement for the security-efficacious status determination of an output memory stage
Arrangement de circuit de détermination efficace au point de vue de la sûreté de l'état d'un étage de mémoire de sortie

(30) Priorität: 26.11.1987 DE 3740078
(43) Veröffentlichungstag der Anmeldung: 31.05.1989
(73) Patentinhaber: Klöckner-Moeller GmbH, 53115 Bonn (DE)
(72) Erfinder: Abendroth, Peter, Ing. grad., D-5461 Stockhausen (DE)

(56) Entgegenhaltungen:
- DE-B- 2 143 375
- ELEKTRONIK, Heft 11, 1977, Seiten 59-64, München, DE; K. MEYER: "Sicherheitssysteme für elektronisch gesteuerte Anlagen"
- SIEMENS ZEITSCHRIFT, Band 48, Nr. 7, 1974, Seiten 495-499, Erlangen, DE; R. WIESSELL: "Grundbausteine und Logikbaugruppe des URTL-Schaltkreissystems U1"
- PATENT ABTRACTS OF JAPAN, Band 7, Nr. 105 (P-195)[1250], 7. Mai 1983; & JP-A-58 27 248 (TOKYO SHIBAURA DENKI K.K.) 17-02-1983
- PATENT ABSTRACTS OF JAPAN, Band 12, Nr. 138 (P-695)[2985], 27. April 1988; & JP-A-62 260 218 (MATSHUSHITA ELECTRIC IND. CO., LTD) 12-11-1987

## Beschreibung

Die Erfindung betrifft eine Schaltungsanordnung zur sicherheitswirksamen Zustandsbestimmung einer Ausgangsspeicherstufe, insbesondere als Peripherieelement zwischen Steuereinheit und Leistungsschaltelement in speicherprogrammierbaren Steuerungen oder anderen Mikroprozessorsystemen, bestehend aus einer ersten und einer zweiten Speicherzelle, die einen zueinander antivalenten Signalzustand aufweisen, welche durch ein vom Mikroprozessor initialisiertes Datenschreibsignal, die ebenfalls vom Mikroprozessor angebotene Dateninformation abspeichert und durch ein erstes logisches Verknüpfungsmittel eine Antivalenzkontrolle des Informationsinhalts der Speicherzellen durchführt,
wobei die Ausgangsspeicherstufe logische zweite und dritte Verknüpfungsmittel aufweist, die in ihrer Zusammenschaltung in einem durch Äquivalenz des Inhaltes der Speicherzellen ausgelösten Fehlerfall direkt und zwangsläufig auf den Setzeingang der ersten Speicherzelle und auf den Rücksetzeingang der zweiten Speicherzelle derart einwirken, daß der Signalzustand des Ausgangs der Ausgangsspeicherstufe die sicherheitsprimäre Vorzugslage einnimmt.

Speicherstufen nach dem Stand der Technik weisen entweder einen dynamischen oder statischen Funktionscharakter auf. Der dynamische Speicher besteht aus einem Energiespeicher, in der Regel ist dies ein Kondensator. Bedingt durch seine automatische Entladung ist es durch die Ansteuersignale erforderlich, den gewünschten Zustand entweder durch Refresh-Vorgänge oder Neuansteuerung durch das Datenschreibsignal wieder zu erreichen. Vorteilhaft ist es hierbei, daß der sichere und unkritische Signalzustand durch die Vorzugsrichtung der Entladung erreicht wird, wenn das Ansteuersignal ausbleibt. Nachteilig ist bei derartigen Speicherstufen, daß zum einen der Kondensator mit größer werdender Zykluszeit größer wird und zum anderen, nach Inaktivierung der Speicherstufe, die Trägheit der Abschaltphase, bedingt durch die große Kapazität, zunimmt. Bekannte statische Speicherstufen sind mit einem Flip-Flop aufgebaut, das von dem Datenschreibsignal gesetzt oder zurück gesetzt wird, und nur bei Betriebsspannungszuschaltung in die Grundstellung gesetzt wird. Äußere Störeinflüsse wirken sich dabei sehr nachteilig aus, da das Flip-Flop einen falschen Zustand annehmen kann. Das erneute Datenschreibsignal bewirkt zwar wieder das definierte Setzen des Flip-Flops, wobei als Folge des zwischenzeitlichen falschen Speicherzustandes Fehlfunktionen wahrscheinlich sind.

In der Siemens Zeitschrift 48 (1974) Heft 7, S. 495-499 wird ein zweikanalig arbeitender Flip-Flop-Baustein angegeben, der je Kanal ein Master-Slave-Flip-Flop und einen Überwachungsverstärker enthält. Der Überwachungsverstärker überwacht die Ausgangssignale der Flip-Flops auf Antivalenz. Bei Äquivalenz der Ausgangssignale gibt der Überwachungsverstärker eine Fehlermeldung , die extern zu einer sicherheitswirksamen Reaktion genutzt werden kann. Die Flip-Flops selber behalten dabei aber ihren fehlerhaften Signalzustand. Erst über ein externes Löschsignal können beide Kanäle wieder in eine definierte Grundstellung gebracht werden. Aus der Zeitschrift ELEKTRONIK 1977, Heft 11, S. 59-64 ist ein zweikanaliges Logiksystem mit Antivalenzüberwachung bekannt geworden. Der Verarbeitungslogik (Kanal 1) ist eine, zu ihr identische Kontrollogik (Kanal 2) parallel geschaltet. Die Ausgangssignale beider Kanäle werden von einer Schaltung aus passiven Bauelementen auf Antivalenz überwacht. Die Auswertung dieser Schaltung erfolgt über eine Antivalenzkontroll-Schaltung. Bei einer Fehlermeldung gibt der Kontrollsignal-Ausgang ein Abschaltsignal, das in einer weiteren externen Schaltung die Anlage auf geeignete Weise in einen gefahrlosen Zustand bringt.

Nach dem aufgeführten Stand der Technik ist es bekannt, daß bei Anordnungen mit Antivalenzkontrolle bei Auftreten von Störungen der Signalzustand von Ausgängen die sicherheitsprimäre Vorzugslage einnimmt. Die Anordnungen selbst sind in der Lage eine Fehlererkennung durchzuführen, sie können sich aber nicht selbst überwachen und durch sofortige Rücksteuerung ihre Ausgänge in den sicherheitswirksamen Zustand bringen.

Die Erfindung stellt sich daher zur Aufgabe, eine störsichere Ausgangsspeicherstufe anzugeben, bei der durch Eigenüberwachung beim Auftreten von Störungen immer eine sicherheitswirksame Signalbestimmung des Ausgangs der Ausgangsspeicherstufe erfolgt.

Die Aufgabe wird erfindungsgemäß durch die im Kennzeichen des Hauptanspruchs angegebenen Merkmale gelöst. Zweckmäßige Ausgestaltungen der Erfindung werden durch die Merkmale der Unteransprüche definiert. Die mit der Erfindung erzielten Vorteile sind vor allem darin zu sehen, daß die Funktionssicherheit eines speicherprogrammierbaren Steuerungssystems oder anderer Mikroprozessorsysteme erheblich stabilisiert wird und die EMV (Elektromagnetische Verträglichkeit) stark verbessert wird. Äußere Störeinflüsse, insbesondere Betriebsspannungseinbrüche, Störtransienten durch das Schalten induktiver Verbraucher und instabile Stromversorgungssysteme verursachen den Informationsverlust statischer Ausgangsspeicherstufen.

Durch das sofortige Erkennen einer Störfunktion und die unmittelbare Fehlermeldung der erfindungsgemäßen Schaltungsanordnung, ist das Steuersystem in der Lage, eine sofortige sicherheitsspezifische Reaktion, beispielsweise durch die Auslösung eines Interrupt's, auszuführen. Besonders vorteilhaft ist es dabei, daß die Ausgangsspeicherstufe eine Eigenüberwachung aufweist, wodurch sie sich sofort mit ihrer Fehlermeldung wieder in die vorbestimmte definierte Lage zurücksetzt. Die Erfindung wird nachfolgend anhand der Zeichnung und einer beispielhaften Schaltungskonfiguration eingehend beschrieben.

Es zeigen :
Fig.1 den prinzipiellen Aufbau der erfindungsgemäßen Ausgangsspeicherstufe.
Fig. 2 eine beispielhafte Schaltungsausführung eines I/O-Ports in dem die erfindungsgemäße Ausgangsspeicherstufe als 16-stufige Ausgangsspeicherstufe Anwendung findet.
Fig. 3 der Schaltungsaufbau einer 16-stufigen Ausgangsspeicherstufe, wie sie in der Schaltungsausführung nach Fig. 2 Anwendung findet.
Fig. 4 das Zeitdiagramm mit den Eingangsbedingungen der erfindungsgemäßen Ausgangsspeicherstufe.
Fig. 4a das Zeitdiagramm mit den Ausgangsbedingungen der erfindungsgemäßen Ausgangsspeicherstufe.

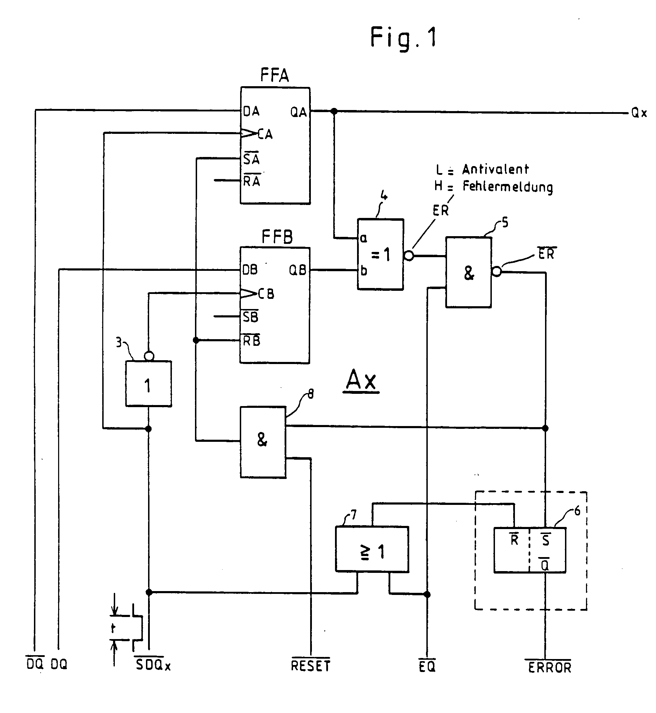

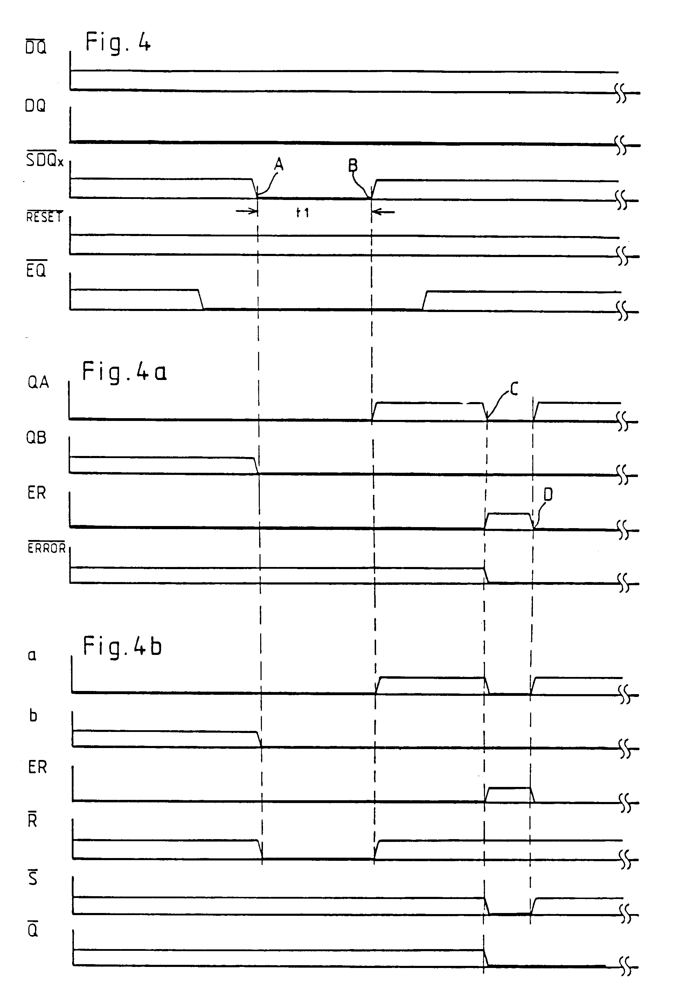

Fig. 4b das Zeitdiagramm in einem beispielhaft angenommenen Fehlerfall, bei dem die erfindungsmäßige Reaktion erfolgt. In Fig. 1 ist der prinzipielle Aufbau der erfindungsgemäßen Ausgangsspeicherstufe dargestellt. Die Flip-Flops FFA und FFB übernehmen mit dem Datenschreibsignal S̅D̅Q̅x̅ die an ihrem Dateneingang DA bzw. DB anstehende Dateninformation D̅Q̅ bzw. DQ. Die Takteingänge CA bzw CB reagieren auf die positive Flanke des Low-aktiven Datenschreibsignals SDQx. Durch die Invertierung des Datenschreibsignals S̅D̅Q̅x̅, mittels Inverter 3, übernimmt zunächst das Flip-Flop FFB seine Dateninformation DQ mit der negativen Flanke von S̅D̅Q̅x̅. Nach der Impulsdauer t übernimmt das Flip-Flop FFA mit der positiven Impulsflanke von S̅D̅Q̅x̅ seine Dateninformation D̅Q̅. Die Flip- Flop Ausgänge QA und QB nehmen zwangsläufig antivalenten Signalzustand ein. Dieser Zustand wird über das Exclusiv-Oder 4 ständig kontrolliert. Tritt eine Fehlfunktion durch eine externe Störung auf, indem eines der beiden Flip-Flops FFA oder FFB einen anderen Signalzustand einnimmt und somit äquivalentes Verhalten der Ausgänge QA und QB erreicht wird, meldet der Ausgang des Exclusiv-Oders H- Zustand, gleichbedeutend mit einer Fehlermeldung ER. Über das Und-Gatter 5 wird das ERROR-Flip-Flop 6 gesetzt. Das E̅R̅R̅O̅R̅-Signal kann jetzt zu einer sicherheitsrelevanten Reaktion z.B. zur Auslösung eines Interrupt's eines Mikroprozessors benutzt werden. Das ERROR-Flip-Flop 6 wird erst bei einem erneuten zulässigen Datenschreibsignal S̅D̅Q̅x̅ zurückgesetzt. Voraussetzung dabei ist, daß die zur Fehlfunktion geführte Störung zwischenzeitlich inaktiv wurde. Gleichzeitig mit dem Setzen des ERROR-Flip-Flops 6 werden die Flip-Flopps FFA und FFB über das UND-Gatter 8 in den vorbestimmten, je nach Systemvorgabe H-oder L-aktiv (hier H-aktiv), sicherheitswirksamen Signalzustand gesetzt, wonach ihre Ausgänge QA und QB wieder antivalentes Verhalten aufweisen und das Setzsignal für das ERROR-Flip- Flop 6 verschwindet. In diesem beispielhaften Fall ist der sicherheitswirksame Signalzustand L-Pegel. Der hier beschriebene Vorgang ist nur bei Adressengleichheit möglich, dh. wenn die Adressierung, des Mikroprozessors mit der voreingestellten Adresse des I/O-Ports übereinstimmt. Der R̅E̅S̅E̅T̅-Eingang bewirkt bei Zuschaltung oder Einbrüchen der Betriebsspannung ein definiertes Setzen der Flip Flops FFA und FFB.

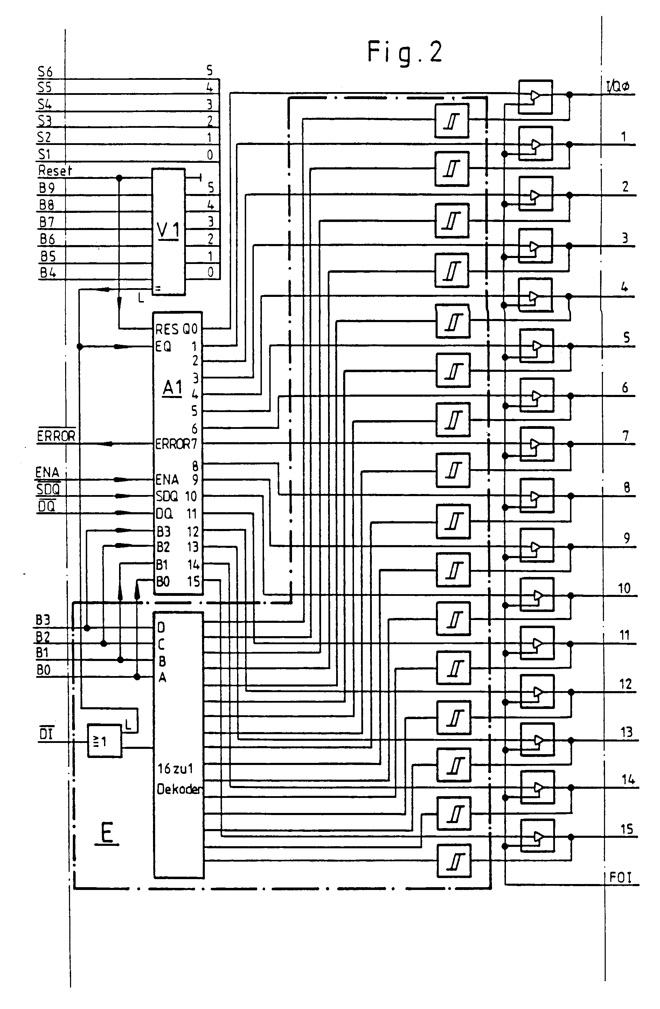

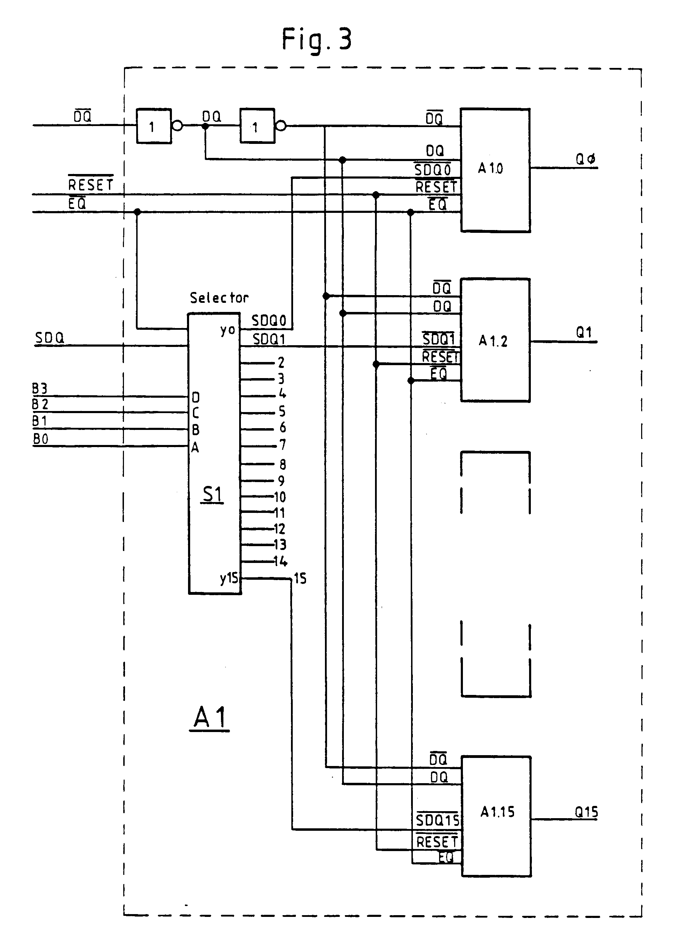

In Fig.2 ist eine beispielhafte Schaltungsausführung eines I/O-Ports dargestellt, in dem die erfindungsgemäße Ausgangsspeicherstufe Anwendung findet. In dem mit Strich-Punkt-Linie gekennzeichneten Bereich E befinden sich die Elemente für die Eingangsfunktion, die nicht erfindungsrelevant ist und auf die daher nicht beschreibend eingegangen wird. Es sei hier lediglich die für die Erfindung wirksame Ausgangsfunktion beschrieben. In dem Baustein A1 sind 16 Ausgangsspeicherstufen nach der in Fig. 1 beschriebenen Art integriert. Die Ausgänge Q0 bis Q15 werden von jeweils einer dieser Ausgangsspeicherstufen angesteuert. Der Vergleicher V1 vergleicht die Adressierung B4-B9 des Mikroprozessors mit der dem I/O-Port (beispielsweise über DIP Schalter) fest vorgegebenen Adresse S1-S6. Bei Adressengleichheit meldet der Vergleicher über EQ die Freigabe dieses I/O-Ports. Jetzt ist mit dem Strobesignal S̅D̅Q̅ das Setzen einer über B0-B3 ausgewählten Ausgangsspeicherstufe möglich. Dieser Vorgang geht eindeutiger aus der nachfolgenden Beschreibung der Fig. 3 hervor, welche den Schaltungsaufbau einer 16-stufigen Ausgangsspeicherstufe darstellt, wie er in der Schaltungsausführung nach Fig. 2 Anwendung findet.

Die 16 Ausgangsspeicherstufen sind mit A1.0 bis A1.15 gekennzeichnet. Mit dem Strobesignal SDQ selektiert der Selector S1 eine über B0-B3 ausgewählte Ausgangsspeicherstufe und steuert die entsprechende Ausgangsspeicherstufe A1.0-A1.15 über den entsprechenden Selectorausgang Y0-Y15 an. Dieses Signal ist dann das Datenschreibsignal S̅D̅Q̅x̅ für die anzusteuernde Ausgangsspeicherstufe. Bei der nachfolgenden Betrachtung der Zeitdiagramme ist das Hinzuziehen der Fig. 1 zum besseren Verständnis angebracht.

In Fig. 4 ist das Zeitgdiagramm mit den Eingangsbedingungen der erfindungsgemäßen Ausgangsspeicherstufe dargestellt. Die Dateninformation D̅Q̅ und DQ sind invertiert. Das Datenschreibsignal S̅D̅Q̅x̅ ist wirksam, wenn die R̅E̅S̅E̅T̅-Bedingung erfüllt ist, hier H-Signal, und wenn Adressengleichheit besteht, nämlich E̅Q̅ = L-Signal.

Fig. 4a zeigt das Zeitgdiagramm mit den Ausgangsbedingungen der erfindungsgemäßen Ausgangsspeicherstufe. Mit der negativen Impulsflanke A des Datenschreibsignals S̅D̅Q̅x̅ übernimmt das Flip-Flop FFB die Dateninformation DQ.

Mit der positiven Impulsflanke B von S̅D̅Q̅x̅ übernimmt das Flip-Flop FFA die Dateninformation D̅Q̅. Der Ausgang ER des Antivalenzvergleichers 4 liegt auf L-Signal, was gleichbedeutend mit Antivalenz der Flip-Flop's FFA und FFB ist. Das ERROR- Flip-Flop 6 ist nicht gesetzt, da keine Fehlermeldung ansteht.

Fig.4b zeigt das Zeitdiagramm in einem beispielhaft angenommenen Fehlerfall, bei dem die erfindungsgemäße Reaktion Anwendung findet. Zum Zeitpunkt A und B der Impulsflanken des Datenschreibsignals S̅D̅Q̅x̅ verhalten sich die Eingänge des Antivalenzvergleichers 4 antivalent. Zum Zeitpunkt C , s. Fig. 4a, kippt das Flipp-Flopp FFA verursacht durch eine externe Störung aus seiner vorgegebenen Lage. Jetzt liegen die Eingänge a und b des Antivalenzvergleichers 4 auf L Signal und sind somit äquivalent. Der Ausgang ER meldet H-Signal, gleichbedeutend mit Fehlermeldung. Das Oder-Gatter 7 hat das ERROR-Flip-Flop 6 zum Setzen freigegeben, da sowohl S̅D̅Q̅x̅ wie auch E̅Q̅ H-Signal führen. Über das UND-Gatter 5 wird das ERROR-Flip-Flop 6 gesetzt und stellt über Q̅ eine ERROR-Meldung zur Verfügung.

Über die UND-Verknüpfung 8 werden mit dem Setzen des ERROR-Flip-Flop's 6 die Flip-Flop's FFA und FFB wieder in den vorbestimmten sicherheitswirksamen Signalzustand gesetzt. Demzufolge verschwindet das Setzsignal S̅ zum Zeitpunkt D.

Das Error-Flip-Flop 6 bleibt gesetzt bis zum nächst gültigen Datenschreibsignal S̅D̅Q̅x̅ und wird dann erst wieder in die inaktive Lage zurückgesetzt. Das ERROR-Flip-Flop 6 kann sowohl für jede Stufe separat angeordnet sein als auch als Sammelfehlermeldung für alle Ausgangsspeicherstufen gelten. Aufwendiger aber vorteilhafter ist die separate Anordnung des ERROR-Flip-Flops, da eine gezieltere Fehlerdiagnose im Hinblick auf die einzelnen Ausgangsspeicherstufen ermöglicht wird.

## Patentansprüche

1. Schaltungsanordnung zur sicherheitswirksamen Zustandsbestimmung einer Ausgangsspeicherstufe (Ax), insbesondere als Peripherieelement zwischen Steuereinheit und Leistungsschaltelement in speicherprogrammierbaren Steuerungen oder anderen Mikroprozessorsystemen, bestehend aus einer ersten Speicherzelle (FFA) und einer zweiten Speicherzelle (FFB), die einen zueinander antivalenten Signalzustand aufweisen, welche durch ein vom Mikroprozessor initialisiertes Datenschreibsignal (S̅D̅Q̅x̅), die ebenfalls vom Mikroprozessor angebotene Dateninformation (D̅Q̅, DQ) abspeichert und durch ein erstes logisches Verknüpfungsmittel (4) eine Antivalenzkontrolle des Informationsinhalts der Speicherzellen (FFA, FFB) durchführt, wobei die Ausgangsspeicherstufe (Ax) logische zweite und dritte Verknüpfungsmittel (5, 8) aufweist, die in ihrer Zusammenschaltung in einem, durch Äquivalenz des Inhaltes der Speicherzellen (FFA, FFB), ausgelösten Fehlerfall, direkt und zwangsläufig auf den Setzeingang (S̅A̅) der ersten Speicherzelle (FFA) und auf den Rücksetzeingang (R̅B̅) der zweiten Speicherzelle (FFB) derart einwirken, daß der Signalzustand des Ausgangs (QX) der Ausgangsspeicherstufe (Ax) die sicherheitsprimäre Vorzugslage einnimmt, dadurch gekennzeichnet, daß das erste Verknüpfungsmittel (4) an seinem Ausgang eine Fehlermeldung (ER) ausgibt, welche mit einem Adressenabgleichsignal (E̅Q̅) durch das zweite Verknüpfungsmittel (5) undverknüpft, und bei Erfüllung der logischen Verknüpfung am Ausgang des zweiten Verknüpfungsmittels (5) als invertierte Fehlermeldung (E̅R̅) zur Verfügung steht und durch das dritte Verknüpfungsmittel (8) als lowaktives Signal mit einem Rücksetzsignal (R̅E̅S̅E̅T̅) oderverknüpft wird und auf den Rücksetzeingang (RB) der zweiten Speicherzelle (FFB) sowie auf den Setzeingang (S̅A̅) der ersten Speicherzelle (FFA) einwirkt.

2. Schaltungsanordnung nach Anspruch 1, **dadurch gekennzeichnet**, daß die Fehlermeldung (E̅R̅) ein ERROR-Flip-Flop (6) setzt, welches dann das E̅R̅R̅O̅R̅ Signal für eine sicherheitsspezifische Reaktion des Mikroprozessors zu Verfügung stellt.

3. Schaltungsanordnung nach einem der Ansprüche 1 oder 2, **dadurch gekennzeichnet**, daß die Fehlermeldung (E̅R̅) bei Adressengleichheit zwischen der voreingestellten Adresse (S1-S6) und der vom Mikroprozessor angebotenen Adresse (B4-B9), durch das von einem Vergleicher (7) erzeugte Abgleichsignal (E̅Q̅) unterdrückt wird.

4. Schaltungsanordnung nach einem der Ansprüche 1 bis 3, **dadurch gekennzeichnet**, daß das ERROR-Flip-Flop (6) immer mit erneutem und gültigem Datenschreibsignal (S̅D̅Q̅x̅) in seine Ruhelage zurückgesetzt wird.

5. Schaltungsanordnung nach einem der Ansprüche 1 bis 4, **dadurch gekennzeichnet**, daß die erste und die zweite Speicherzelle (FFA) und (FFB) bei Zuschaltung der Betriebsspannung oder bei durch Störeinflüsse bedingte Einbrüche der Betriebsspannung, mittels des Rücksetzsignals (̅R̅E̅S̅E̅T̅)̅ in einen vorbestimmten, unkritischen Zustand gesetzt wird, und somit der Signalzustand des Ausgangs (Qx) der Ausgangsspeicherstufe (Ax) die sicherheitsprimäre Vorzugslage einnimmt.

## Claims

1. Circuit arrangement for determining the state of an output memory stage (Ax) for safety purposes, particularly where forming a peripheral component between the control unit and a power switching device in programmable controllers or other microprocessing systems, consisting of a first memory location (FFA) and a second memory location (FFB) displaying mutually antivalent signal states, said circuit arrangement recording, by means of a data-write signal (S̅D̅Q̅x̅) initialized by the microprocessor, the data information (D̅Q̅, DQ) likewise supplied by the microprocessor, and performing an antivalence check on the information contained in memory locations (FFA, FFB) by means of a first logic element (4), the output memory stage (Ax) containing second and third logic elements (5, 8) connected such that in the event of a fault triggered by equivalence in content of the memory locations (FFA, FFB), said logic elements (5, 8) act directly and positively on the setting input (S̅A̅) of the first memory location (FFA) and on the resetting input (R̅B̅) of the second memory location (FFB) such that the signal state of the output (QX) of the output memory stage (Ax) assumes the priority safety state, **characterized in that** the first logic element (4) outputs an error message (ER) at its output, said error message being ANDed by the second logic element (5) with an address matching signal (E̅Q̅), and in the event of a successful logic operation, being made available at the output of the second logic element (5) in the form of an inverted error message (E̅R̅) and being ORed as a low-active signal with a reset signal (R̅E̅S̅E̅T̅) by the third logic element (8) and acting on the resetting input (RB) of the second memory location (FFB) and on the setting input (S̅A̅) of the first memory location (FFA).

2. Circuit arrangement as claim 1, **characterized in that** the error message (E̅R̅) sets an ERROR flip-flop (6), which then makes the E̅R̅R̅O̅R̅ signal available for a safety function reaction of the microprocessor.

3. Circuit arrangement as claim 1 or claim 2, **characterized in that** the error message (E̅R̅) is suppressed by a compensation signal (E̅Q̅) generated by a comparator (7) in the event of address equality between the preset address (S1-S6) and the address provided by the microprocessor (B4-B9).

4. Circuit arrangement as one of claims 1, 2 and 3, **characterized in that** the ERROR flip-flop (6) is always reset to its idle state by a new and valid data-write signal (S̅D̅Q̅x̅).

5. Circuit arrangement as one of claims 1 to 4, **characterized in that** the first and second memory locations (FFA) and (FFB) are set to a predetermined, non-critical state by means of the reset signal (R̅E̅S̅E̅T̅) upon switching on of the operating voltage or in the event of interruptions in the operating voltage as a result of noise, with the result that the signal state of the output (Qx) of the output memory stage (Ax) assumes the priority safety state.

## Revendications

1. Configuration de couplage pour la détermination d'état efficiente pour la sécurité d'un niveau mémoire de sortie (Ax), en particulier en tant qu'élément périphérique entre unité de commande et élément de circuit de puissance dans des commandes par programme enregistré ou dans d'autres systèmes de microprocesseurs, se composant d'une première cellule de mémoire (FFA) et d'une deuxième cellule de mémoire (FFB) présentant un état de signal anticoincidant l'une par rapport à l'autre, mémorisant l'information de données (D̅Q̅, DQ) offerte également par le microprocesseur par l'intermédiaire d'un signal d'inscription des données (S̅D̅Q̅x̅) initialisées par le microprocesseur et exécutant un contrôle d'anticoincidance des informations contenues dans les cellules de mémoire (FFA, FFB) par l'intermédiaire d'un premier élément d'enchaînement logique (4), le niveau mémoire de sortie (Ax) présentant des deuxièmes et troisièmes éléments d'enchaînement logiques (5, 8) agissant dans leur interconnexion directement et inévitablement sur l'entrée de positionnement (S̅A̅) de la première cellule de mémoire (FFA) et sur l'entrée de remise à zéro (R̅B̅) de la deuxième cellule de mémoire (FFB) dans le cas d'un défaut déclenché par équivalence du contenu des cellules de mémoire (FFA, FFB) de telle sorte que l'état de signal de la sortie (QX) du niveau mémoire de sortie (Ax) occupe la position prioritaire primordiale pour la sécurité, caractérisée en ce que le premier élément d'enchaînement (4) émet à sa sortie un message de défaut (ER) avec enchaînement ET avec un signal d'équilibrage d'adresse (E̅Q̅) par l'intermédiaire du deuxième élément d'enchaînement (5) et disponible comme message de défaut inversé (E̅R̅) lorsque l'enchaînement logique à la sortie du deuxième élément d'enchaînement (5) est réalisé, et relié avec enchaînement OU par l'intermédiaire du troisième élément d'enchaînement (8) en tant que signal actif low avec un signal de remise à zéro (R̅E̅S̅E̅T̅) et agissant sur l'entrée de remise à zéro (RB) de la deuxième cellule de mémoire (FFB) ainsi que sur l'entrée de positionnement (S̅A̅) de la première cellule de mémoire (FFA).

2. Configuration de couplage selon revendication 1 **caractérisée en ce que** le message de défaut (E̅R̅) place un Flip-Flop ERROR qui met alors à disposition le signal E̅R̅R̅O̅R̅ pour une réaction spécifique à la sécurité du microprocesseur.

3. Configuration de couplage selon l'une des revendications 1 ou 2 **caractérisée en ce qu'**en cas d'égalité d'adresses entre l'adresse préréglée (S1-S6) et l'adresse (B4-B9) offerte par le microprocesseur, le message de défaut (E̅R̅) est supprimé par le signal d'équilibrage (E̅Q̅) produit par un comparateur (7).

4. Configuration de couplage selon l'une des revendications 1 à 3 **caractérisée en ce que** le Flip-Flop ERROR (6) est toujours remis dans sa position de repos avec signal d'inscription des données nouveau et valide (S̅D̅Q̅x̅).

5. Configuration de couplage selon l'une des revendications 1 à 4 **caractérisée en ce qu'**en cas d'enclenchement de la tension de service ou en cas de chutes de la tension de service dues à des influences perturbatrices, la première et la deuxième cellule de mémoire (FFA) et (FFB) sont mises dans un état non critique prédéterminé au moyen du signal de remise à zéro (R̅E̅S̅E̅T̅) et qu'ainsi le signal d'état de la sortie (Qx) du niveau mémoire de sortie (Ax) occupe la position prioritaire primordiale pour la sécurité.
